Europäisches Patentamt

European Patent Office

Office européen des brevets

(11) Veröffentlichungsnummer: **0 089 484**
A2

(12) **EUROPÄISCHE PATENTANMELDUNG**

(21) Anmeldenummer: **83101382.6**

(22) Anmeldetag: **14.02.83**

(51) Int. Cl.³: **F 16 L 11/12**
**F 16 L 59/02, B 32 B 27/00**

(30) Priorität: **19.03.82 DE 3210053**

(43) Veröffentlichungstag der Anmeldung:
**28.09.83 Patentblatt 83/39**

(84) Benannte Vertragsstaaten:
**BE DE FR GB NL**

(71) Anmelder: **DYNAMIT NOBEL AKTIENGESELLSCHAFT**
**Patentabteilung Postfach 1209**
**D-5210 Troisdorf, Bez. Köln(DE)**

(72) Erfinder: **Breitscheidel, Hans-Ulrich**
**Kapellenstrasse 43a**
**D-5200 Siegburg(DE)**

(72) Erfinder: **Lorry, Cosmas**
**Agathastrasse 17**
**D-5216 Niederkassel(DE)**

(72) Erfinder: **Spielau, Paul, Dr.**
**Van-Gogh-Platz 10**
**D-5210 Troisdorf-Eschmar(DE)**

(54) **Schwimmende Rohrleitung mit einer mehrschichtigen Isolierhülle enthaltend Schaumstoffbahnen.**

(57) Schwimmende Rohrleitungen mit einer mehrschichtigen Isolierhülle mit einer mehrlagigen Kernschicht aus miteinander verbundenen geschlossenzelligen elastischen Schaumstoffbahnen, insbesondere vernetzten Polyolefinschaumstoffbahnen und je einer mehrlagigen an die Kernschicht beidseitig anschließenden Mantelschicht aus Kunststofffolie, wobei die äußere Mantelschicht aus miteinander durch Quellverschweißen oder mittels Wärme flächig verbundenen Bahn auf Basis Ethylenpropylen-Dien-Terpolymeren und/oder Ethylenpropylen-Copolymeren bestehen, die vulkanisationsbeschleunigerfrei sind und die Bahnen der äußeren und inneren Mantelschicht mit der Kernschicht durch Flammkaschieren flächig verbunden sind.

Fig 1

EP 0 089 484 A2

0089484

Troisdorf, den 9. März 1982
OZ 82019   MG/Bd

DYNAMIT NOBEL AKTIENGESELLSCHAFT
Troisdorf Bez. Köln

Schwimmende Rohrleitung mit einer mehrschichtigen Isolierhülle enthaltend Schaumstoffbahnen

Die Erfindung bezieht auf schwimmende Rohrleitungen mit einer mehrschichtigen Isolierhülle mit einer mehrlagigen Kernschicht aus miteinander verbundenen geschlossenzelligen elastischen Schaumstoffbahnen, insbesondere vernetzten Polyolefinschaumstoffbahnen und je einer mehrlagigen an die Kernschicht beidseitig anschließenden Mantelschicht aus Kunststoff.

Das Herstellen von einschichtigen oder mehrschichtigen Isolierhüllen- bzw. -rohren aus elastischen Schaumstoffbahnen in kontinuierlichen und diskontinuierlichen Prozessen wird beispielsweise in der DE-OS 19 15 768 beschrieben. Hierbei ist insbesondere an die Herstellung von Isolierhüllen für Isolationszwecke, d. h. gegen Kälte oder Wärme wie Fernheizungsrohre gedacht.

Es ist auch bekannt, schwimmende Rohrleitungen mit einer Kernschicht aus elastischen Schaumstoffbahnen und Innen- und Außenmantel aus Kunststoffolie herzustellen, wobei in dem deutschen Gebrauchsmuster 80 02 596 beispielsweise eine Vorrichtung zum Herstellen solcher schwimmenden Rohrleitungen im diskontinuierlichen Verfahren abschnittsweise beschrieben ist.

Da schwimmende Rohrleitungen sowohl im hohlen Kern als auch an der äußeren Oberfläche hohen mechanischen Beanspruchungen ausgesetzt sein können, sind für diese Schichten insbesondere mechanisch hochwertige Kunststoffe, wie vulkanisierte Kautschuke oder Gummi im Einsatz. Es hat sich jedoch als nachteilig erwiesen, daß bei der nachträglichen Ausvulkanisation der Kautschuke die Schaumstoffschichten in Mitleidenschaft gezogen werden und ein starker Schrumpfungsprozeß durch Wärmeeinwirkung zur teilweisen Zerstörung der Kernschicht aus Schaumstoff führt. Der Erfindung liegt die Aufgabe zugrunde, diese durch die Vulkanisation der äußeren Mantelschichten hervorgerufenen Nachteile zu beheben und eine schwimmende Rohrleitung auf Basis von elastischen Schaumstoffbahnen vorzuschlagen, die eine bessere Verträglichkeit der eingesetzten Materialien bei Erfüllung der an die schwimmende Rohrleitung zu stellenden mechanischen Anforderungen gewährleistet.

Gemäß der Erfindung wird für eine schwimmende Rohrleitung gemäß Gattungsbegriff des Anspruchs 1 vorgeschlagen, daß die äußere Mantelschicht aus miteinander durch Quellverschweißen oder mittels Wärme flächig verbundenen Bahnen auf Basis Ethylenpropylen-Dien-Terpolymeren und/oder Ethylenpropylen-Copolymeren bestehen, die vulkanisationsbeschleunigerfrei sind, enthaltend

35 bis 46 Gew.-%   EPDM oder EPM bzw. Mischungen aus EPDM und EPM,
40 bis 58 Gew.-%   Füllstoffe, hiervon bis zu 50 Gew.-% Ruß,
5 bis 12 Gew.-%   Extender oder ähnliches,
1,0 "   0,1 " -%   Stabilisatoren und Alterungsschutzmittel,
5 bis  1,9 " -%   Gleitmittel und Verarbeitungshilfsmittel.

- 3 -

25 bis 19 Gew.-% verstärkende Rußtypen,
2,0 " 0,1 " -% Gleitmittel wie Metallseifen und
2,3 " 1,8 " -% Verarbeitungshilfsmittel wie Montansäureester, hydrierte Kohlenwasserstoffharze

enthalten.

7. Isolierhülle nach einem der Ansprüche 1 bis 6, dadurch gekennzeichnet, daß die innere Mantelschicht (1) aus den gleichen Bahnen wie sie für die äußere Mantelschicht (2) eingesetzt sind, hergestellt ist.

8. Isolierhülle nach einem der Ansprüche 1 bis 6, dadurch gekennzeichnet, daß die innere Mantelschicht (1) aus Bahnen eines vulkanisierbaren Kautschuks hergestellt und vulkanisiert ist.

9. Isolierhülle nach einem der Ansprüche 1 bis 8, dadurch gekennzeichnet, daß die äußere Mantelschicht (2) 10 bis 20 Bahnen (2a) enthält.

10. Isolierhülle nach einem der Ansprüche 1 bis 9, dadurch gekennzeichnet, daß die innere Mantelschicht (1) 3 bis 10 Bahnen (1a) enthält.

11. Isolierhülle nach einem der Ansprüche 1 bis 10, dadurch gekennzeichnet, daß die Bahnen (1a, 2a) auf Basis von EPDM und/oder EPM mit einem Lösungsmittelgemisch aus 20 bis 60 Vol.-% eines aromatischen Lösungsmittels und 80 bis 40 Vol.-% eines aliphatischen Lösungsmittels mit einem Siedebereich von 60 bis 140°C quellverschweißt sind.

— 4 —

12. Isolierhülle nach Anspruch 11, dadurch gekennzeichnet, daß zum Quellverschweißen der Bahnen (1a, 2a) 75 bis 90 Gew.-% Lösungsmittelgemisch und 25 bis 10 Gew.-% darin enthaltener gelöster elastomerer Kunststoff auf Basis EPDM und/oder EPM verwendet ist.

13. Isolierhülle nach Anspruch 11 oder 12, dadurch gekennzeichnet, daß ein Lösungsmittelgemisch enthaltend 20 bis 30 Vol.-% Toluol und 80 bis 70 Vol.-% Benzin mit einem Siedebereich von 95 bis 140°C eingesetzt ist.

1,0 bis 0,1 Gew.-% Stabilisatoren und Alterungsschutzmittel wie sterisch gehinderte phenolische Antioxidantien, phenolische Phosphite, Thioester aliphatischer Carbonsäuren,

25 bis 19 Gew.-% verstärkende Rußtypen,

2,0 " 0,1 " -% Gleitmittel wie Metallseifen und

2,3 " 1,8 " -% Verarbeitungshilfsmittel wie Montansäureester, hydrierte Kohlenwasserstoffharze.

Beim Quellverschweißen der elastomeren Kunststoffbahnen für die Mantelschichten wird bevorzugt ein Lösungsmittelgemisch aus 20 bis 60 Vol.-% eines aromatischen Lösungsmittels und 80 bis 40 Vol.-% eines aliphatischen Lösungsmittels mit einem Siedebereich von 60 bis 140°C eingesetzt.

Mit dem erfindungsgemäß vorgeschlagenen Quellschweißmittel gelingt es, auch bei den speziellen ausgewählten elastomeren Kunststoffen das Quellschweißen anzuwenden und eine homogene dichte Verbindung bei ausreichender Anlösung zu erzielen. Wesentlich ist dabei der Einsatz eines Lösungsmittelgemisches mit einem aliphatischen und einem aromatischen Anteil, wobei als aromatischer Anteil bevorzugt Toluol eingesetzt wird. Auch Xylol ist möglich. Als aliphatische Lösungsmittel kommen insbesondere Benzin auf Basis eines Gemisches von gesättigten aliphatischen Kohlenwasserstoffen mit 5 bis 12 C-Atomen in Frage. Das Benzin kann auch noch geringe Mengen ungesättigter naphthenischer und aromatischer Kohlenwasserstoffe enthalten. Ein Lösungsmittelgemisch mit einer Zusammensetzung enthaltend 20 bis 30 Vol.-% Toluol und 80 bis 70 Vol.-% Benzin mit einem Siedebereich von 95 bis 140°C läßt sich bereits bei Temperaturen ab 15°C und höher verarbeiten. Es kann jedoch auch vorteilhaft sein, die Lösungsmittel mit gelöstem Kunststoff anzureichern. Eine bevorzugte Zusammensetzung hierzu sieht vor, daß das Quellschweißmittel 75 bis 90 Gew.-%

- 6 -

Lösungsmittelgemisch und 25 bis 10 Gew.-% darin gelöster elastomerer Kunststoff auf Basis EPDM und/oder EPM ggf. mit Zusatzstoffen enthält.

Die schwimmenden Rohrleitungen können relativ große Dimensionen erreichen, hierbei ist an Kerndurchmesser bis zu 1 m und Außendurchmesser bis zu 2 m und mehr gedacht. Dafür sind Isolierhüllen mit Dicken bis zu 50 cm und mehr erforderlich.

Um schwimmende Leitungen, die einer hohen Beanspruchung, auch einem Zusammentreffen mit Schiffrumpfen usw. gewachsen sind herzustellen, wird in Weiterbildung der Erfindung vorgeschlagen, dass die Kernschicht aus 10 bis 70 Polyolefinschaumstoffbahnen einer Dicke von 8 bis 20 mm mit einem Raumgewicht von 20 bis 30 kg/m$^3$, die flächig miteinander verbunden sind, insbesondere durch Flammkaschieren, enthält. Für die äußere Mantelschicht hingegen werden Bahnen auf Basis EPDM und/oder EPM, die vulkanisationsbeschleunigerfrei sind, vorgeschlagen, und zwar 3 bis 20 Bahnen, die aufgewickelt und flächig miteinander verbunden die Mantelschicht bilden. Für die innere Mantelschicht hingegen werden vorzugsweise 3 bis 8 Bahnen aufgewickelt und flächig miteinander verbunden als ausreichend angesehen.

Die erfindungsgemäß vorgeschlagenen schwimmenden Rohrleitungen weisen einen Kern aus geschlossenzelligem elastischem Schaumkunststoff niedrigen Raumgewichtes auf, der den nötigen Auftrieb verleiht, und sind beidseitig mit elastomeren Kunststoffdichtungsbahnen sowohl wasserdicht als auch insbesondere gegenüber mechanischer Belastung eingebettet. Die erfindungsgemäße Kombination von Materialien für Kernschichten, innere Mantelschicht und äußere Mantelschicht hat zudem den Vorteil, daß auch die Stirnflächen versiegelt werden können und ggf. miteinander

- 7 -

verschweißt werden können bei aneinandergrenzenden Rohrleitungsstücken, um das Herstellen von dichten Kupplungsstellen zu erleichtern.

Die eingesetzten vulkanisationsbeschleunigerfreien Dichtungsbahnen zeichnen sich des weiteren dadurch aus, daß die Eigenschaft der Verschweißbarkeit, insbesondere auch der Quellverschweißbarkeit erhalten bleibt und damit eine einfache Herstellung dickerer Mantelschichten durch Aufwickeln und flächigem Verbinden ermöglicht ist. Witterungs- und Alterungsbeständigkeit der Außenschichten sind ebenfalls gegeben, wobei durch Verstärkungseinlagen die Reiß- und Dehnfestigkeit und Zugfestigkeit weiter erhöht wird. Auch die Kältefestigkeit und Perforationsfestigkeit daneben Schrumpfarmut und Dimensionsstabilität ist durch den erfindungsgemäß vorgeschlagenen Sandwich-Aufbau der schwimmenden Rohrleitung gegeben. Insbesondere haben sich elastomere Kunststoffe wie teilkristalline Ethylenpropylen-Terpolymere oder teilkristalline Ethylenpropylen-Copolymere bewährt, deren Ethylengehalt größer 65 % und Propylengehalt kleiner 35 % ist bei EPM und deren Ethylengehalt größer 65 % und Propylengehalt kleiner 30 Gew.-% bei bis zu maximal 8 Gew.-% Dien-Komponente bei EPDM ist. Als Dien-Komponente kommt beispielsweise Ethylidennorbonen in Frage. Der Mindestgrad an Teilkristallinität der eingesetzten EPDM und EPM wird nach der DSC-Methode im Differenzialabtastkalorimeter gemessenen Schmelzkurve bestimmt. Das Maximum des Schmelzpeaks gemessen an Temperatur TS in $^{\circ}$C nach der DSC-Kurve wird als endothermer Peak bezeichnet, der sehr eng oder aber auch einen größeren Bereich umfassen kann. Bei Ethylen-Propylen-Terpolymeren liegt die Temperatur TS im Bereich um 50$^{\circ}$C. Die zum Schmelzen benötigte Wärmemenge, die sogenannte Schmelzwärme Hs gemessen ebenfalls nach der DSC-Methode gibt dann Aufschluß über das Vorhandensein kristalliner Blöcke im EPDM- bzw. EPM. Solche kristallinen EPDM bzw. EPM mit einer

Schmelzwärme von mindestens 10 J/g werden erfindungsgemäß bevorzugt eingesetzt. Des weiteren sollen die eingesetzten EPDM und EPM eine Mindestfestigkeit bzw. Reißfestigkeit gemessen nach DIN 53 455 von mindestens 5 N/mm$^2$ aufweisen.

Nachfolgend wird ein Beispiel einer verstärkten elastomeren Bahn, wie sie insbesondere für den äußeren Mantel aber auch für den inneren Mantel der schwimmenden Rohrleitung eingesetzt werden kann in ihrem Aufbau und Eigenschaften beschrieben.

Für die an zwei Schichten mit Versätrkungseinlagen kaschierte Bahn werden für die Kunststoffschichten Folien einer Dicke von 0,75 mm aus einer Materialzusammensetzung A gem. Tabelle I und für die Verstärkungseinlage ein Glasgewebe mit einem Flächengewicht von 30 g/m$^2$ mit einer Schiebefestausrüstung auf Basis Vinylpropionatdispersion eingesetzt und durch Doublieren zu der Bahn vereinigt.

### Tabelle I

| Zusammensetzung | A (Gew.-Teile) |
|---|---|
| EPDM mit 67 Gew.-% Äthylen<br>27 Gew.-% Propylen<br>6 Gew.-% Äthylidennorbonen<br>$\Delta H_s$ 14 J/g,<br>Reißfestigkeit 11,2 N/mm$^2$ | 40,0 |
| Sillitin (Kieselerde) | 27,0 |
| Extenderöl | 8,0 |
| Kohlenwasserstoffharz | 2,0 |
| Ruß, halbaktiv | 22,5 |
| Calciumseife | 0,3 |
| Antioxydants | 0,2 |

- 9 -

Die hergestellte verstärkte Bahn hat folgende Eigenschaften:

| Dicke | DIN 53370 | | | |
|---|---|---|---|---|
| Reißkraft | DIN 53354 | längs/quer Gewebe | >400/>400 | N/5cm |
| Reißkraft | DIN 53354 | längs/quer Folie | >450/>450 | N/5cm |
| Reißdehnung | DIN 53354 | längs/quer Gewebe | 2/2 | % |
| Reißdehnung | DIN 53354 | längs/quer Folie | >450/>450 | % |
| Spez. Gewicht | DIN 53479 | | 1270 | kg/m |
| Trennfestigkeit der Schichten | DIN 53357 | | >100 | N/5cm |
| Maßänderung bei +80°C nach 6 Stunden | DIN 53377 | | <0,5 | % |
| Kälteschlagwert | VDCH 22-02 | | 218 | K |

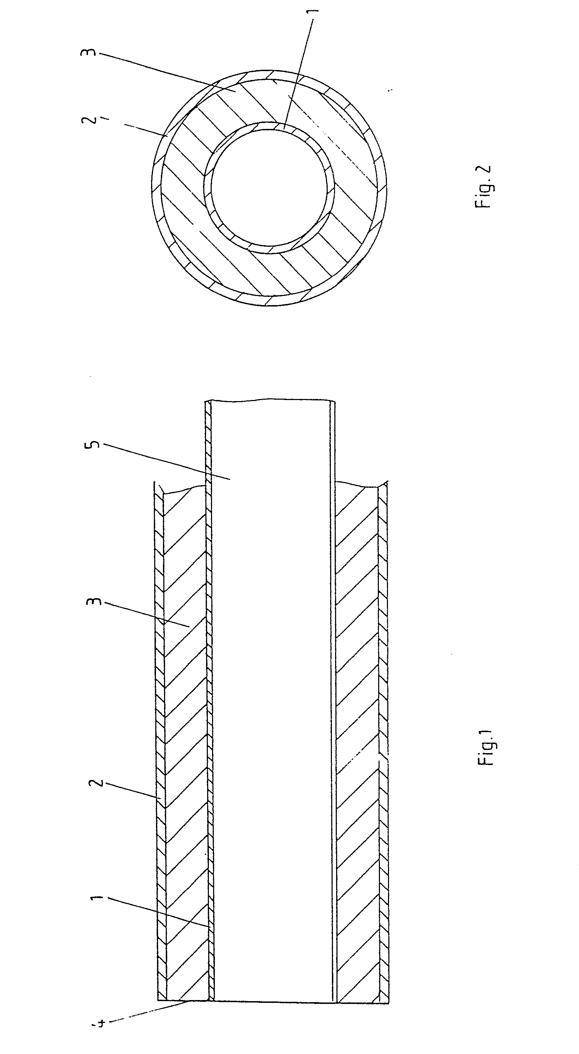

In der Zeichnung ist in den Figuren 1 bis 3 die schwimmende Rohrleitung nochmals schematisch dargestellt.

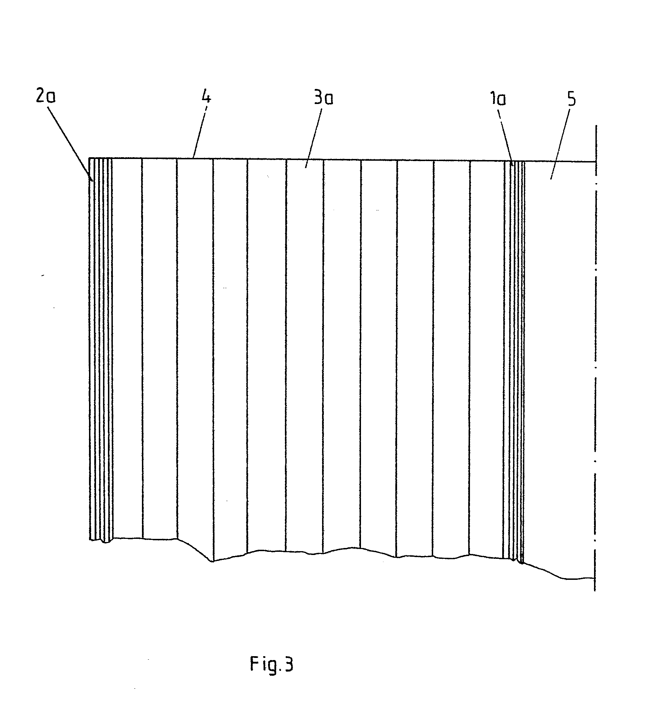

Die Fig. 1 zeigt einen auszugsweisen Längsschnitt durch eine schwimmende Rohrleitung, die Figur 2 einen Querschnitt und die Figur 3 einen auszugsweisen Längsschnitt durch die schwimmende Rohrleitung in vergrößerter Darstellung.

Die schwimmende Rohrleitung ist im Prinzip so aufgebaut, daß die mehrschichtige Isolierhülle aus einer Kernschicht aus leichtgewichtigem Schaumstoff, insbesondere geschlossenzelligen elastomeren Schaumstoffen wie Polyolefinschaumstoffen und hier insbesondere chemisch vernetzten Polyolefinschaumstoffen wie beispielsweise Polyethylenschaumstoffen besteht. Hierbei wird die Dicke der Kernschicht durch Mehrfachaufwicklung von Schaumstoffbahnen erzielt. Die Kernschicht 3 ist dann von der inneren Mantelschicht 1 und der äußeren Mantelschicht 2 abgedeckt, wobei beide haftfest flächig mit der Kernschicht beispielsweise durch Flammkaschieren oder Quellverschweißen verbunden sind. Es wäre auch denkbar der Einsatz eines Klebers, was jedoch aufwendig ist. Die Isolierhülle umschließt dann den Kern 5

der Rohrleitung. An den Stirnflächen 4 werden dann die schwimmenden Rohrleitungsabschnitte aneinander gekuppelt. Die Fig. 2 zeigt den Querschnitt des der schwimmenden Rohrleitung nach Fig. 1.

In der Fig. 3 ist im einzelnen zu erwähnen, daß die äußere Mantelschicht 2, die innere Mantelschicht 1 und die Kernschicht 3 aus jeweils mehreren Schichten bzw. Bahnen bestehen. Hierbei besteht die Kernschicht aus Schaumstoffbahnen 3a, die übereinandergewickelt und insbesondere vollflächig miteinader kompakt verbunden sind. Die innere Mantelschicht besteht aus einer Mehrfachwicklung von vulkanisierbaren oder vulkanisationsbeschleunigerfreien Kautschukbahnen, die ebenfalls vollflächig miteinander verbunden sind. Die äußere Mantelschicht besteht aus einem vulkanisationsbeschleunigerfreien Kautschuk, d.h. EPDM und/oder EPM-Bahnen 2a, die mehrfach gewickelt und vollflächig miteinander entweder durch Flammkaschieren oder Quellverschweißen verbunden sind. Auch der Verbund zwischen den Bahnen 1a, 2a mit den Bahnen 3a der Kernschicht geschieht vorzugsweise durch Flammkaschieren.

Bei der Herstellung wird so vorgegangen, daß auf einen Kern, der dem späteren Kerndurchmesser 5 der schwimmenden Rohrleitung entspricht, zuerst der Innenmantel 1 aufgewickelt wird. Falls es sich hierbei um eine vulkanisierfähiges Material handelt, wird die Mantelschicht 1 nach dem Aufwickeln direkt vulkanisiert und erst anschließend die Kernschicht und die äußere Mantelschicht aufgebracht. Ein wesentlicher Vorteil des erfindungsgemäßen Aufbaus ist daß die äußere Mantelschicht nicht zu vulkanisiert werden braucht, dennoch eine gute Verbindung zur Kernschicht und hohe mechanische Festigkeiten und Schutz nach außen hin abgibt.

Troisdorf, den 9. März 1982
OZ 82019    MG/Bd

Patentansprüche

1. Schwimmende Rohrleitungen mit einer mehrschichtigen Isolierhülle mit einer mehrlagigen Kernschicht aus miteinander verbundenen geschlossenzelligen elastischen Schaumstoffbahnen, insbesondere vernetzten Polyolefinschaumstoffbahnen und je einer mehrlagigen an die Kernschicht beidseitig anschließenden Mantelschicht aus Kunststoffolie, d a d u r c h   g e k e n n z e i c h - n e t ,  daß die äußere Mantelschicht (2) aus miteinander durch Quellverschweißen oder mittels Wärme flächig verbundenen Bahnen (2a) auf Basis Ethylenpropylen-Dien-Terpolymeren und/oder Ethylenpropylen-Copolymeren bestehen, die vulkanisationsbeschleunigerfrei sind, enthaltend

35 bis 46 Gew.-%   EPDM oder EPM bzw. Mischungen aus EPDM und EPM,

40 bis 58 Gew.-%   Füllstoffe, hiervon bis zu 50 Gew.-% Ruß,

5 bis 12 Gew.-%   Extender oder ähnliches,

1,0 "   0,1 " -%   Stabilisatoren und Alterungsschutzmittel,

5 bis   1,9 " -%   Gleitmittel und Verarbeitungshilfsmittel.

2. Isolierhülle nach Anspruch 1, dadurch gekennzeichnet, daß die Bahnen (1a, 2a) der äußeren und inneren Mantelschicht (1,2) mit der Kernschicht (3) durch Flammkaschieren flächig verbunden sind.

3. Isolierhülle nach Anspruch 1 oder 2, dadurch gekennzeichnet, daß die Kernschicht  10 bis 70  chemisch vernetzte  Polyolefinschaumstoffbahnen einer Dicke von 8 bis 20 mm mit einem Raumgewicht von 20 bis 30 kg/m$^3$, die flächig miteinander durch Flammkaschieren verbunden sind, enthält.

4. Isolierhülle nach einem der Ansprüche 1 bis 3, dadurch gekennzeichnet, daß die Bahnen (1a, 2a) mit einer einseitig aufkaschierten oder einkaschierten Verstärkungseinlage aus einem Gewebe, Gelege, Gewirke o.ä. aus Kunststoff und/oder Glasfasern mit einem Flächengewicht von 20 bis 70 g/m$^2$, vorzugsweise 25 bis 50 g/m$^2$ versehen sind.

5. Isolierhülle nach Anspruch 4, dadurch gekennzeichnet, daß die Bahnen (2a) aus zwei kalandrierten Schichten auf Basis EPDM und/oder EPM je einer Dicke von 0,6 bis 0,9 mm mit einer unter Anwendung von Druck und Wärme einkaschierten Verstärkungseinlage aus einem Gewebe, Gelege, Gewirke o.ä. aus Kunststoff und/oder Glasfasern mit einem Flächengewicht von 20 bis 70 g/m$^2$, vorzugsweise 25 bis 50 g/m$^2$ und Zwischenräumen des Gewebes, Geleges, Gewirkes o.ä. zwischen den Kett- und Schußfäden von mindestens 2,0 mm, vorzugsweise über 3 mm Abstand, wobei die Bahn durch den Durchgriff des elastomeren Kunststoffes durch die Zwischenräume des Gewebes o.dgl. eine Trennkraft der Schichten größer 100 N/5 cm aufweist, bestehen.

6. Isolierhülle nach einem der Ansprüche 1 bis 5, dadurch gekennzeichnet, daß die Bahnen (2a)

35 bis 46 Gew.-% EPDM und/oder EPM,

31 bis 26 Gew.-% Füllstoffe wie Kreide, Kaolin, Talkum, Schwerspat und/oder Glasfasern in Mischungen mit Kieselerde oder nur Kieselerde,

12 bis 7 Gew.-% aliphatische und/oder naphtenische Extenderöle,

1,0 " 0,1 " -% Stabilisatoren und Alterungsschutzmittel wie sterisch gehinderte phenolische Antioxidantien, phenolische Phosphite, Thioester aliphatischer Carbonsäuren

Die erfindungsgemäß für die schwimmenden Rohrleitungen für den Außenmantel eingesetzten vulkanisationsbeschleunigerfreien elastomeren Kunststoffbahnen ermöglichen das Herstellen von mehrschichtigen Isolierhüllen ohne Druck- und Temperaturbelastungen, wie sie bei nachträglichen Vulkanisationen von Kunststoffen erforderlich sind. Auf diese Weise wird eine Temperaturbelastung für den aufgewickelten Schaumstoff vermieden, so daß weder die Zellstruktur zerstört wird noch ein Schrumpf der Schaumstoffbahnen im aufgewickelten Zustand eintreten kann. Die mit den erfindungsgemäß eingesetzten Bahnen anwendbaren Verbindungsmethoden sind bevorzugt das Flammkaschieren oder das Quellschweißen, beide Verbindungsarten führen zu homogenen Verbindungen und damit zu einer mechanisch hochbelastbaren Außenhaut der schwimmenden Rohrleitung. Die Herstellungsverfahren für solche mehrschichtigen Rohrleitungen sind entweder das diskontinuierliche Fertigen von Rohrabschnitten im Aufwickelverfahren radial um den Kern oder ggf. kontinuierlich durch schraubenlinienförmiges Aufwickeln von Schaumstoffbändern, mehrfach.

Für den Innenmantel der schwimmenden Leitung kann nach einem weiteren Vorschlag der Erfindung eine innere Mantelschicht aus den gleichen Bahnen wie für die äußere Mantelschicht durch Wickeln hergestellt werden. Es ist jedoch auch möglich, nach einem weiteren Vorschlag der Erfindung, für die innere Mantelschicht ein anderes Material als für die äußere Mantelschicht zu wählen, wobei vorzugsweise für die innere Mantelschicht Bahnen eines vulkanisierbaren Kautschuks eingesetzt werden. Hierbei ist dann vorgesehen, nach dem Aufwickeln der inneren Mantelschicht diese auszuvulkanisieren und danach die Schaumstoffschichten und den äußeren Mantel aufzuwickeln.

- 4 -

Die erfindungsgemäß eingesetzten Materialien für die Mantelschichten und die Kernschichten ermöglichen, eine Isolierhülle herzustellen, bei der die Bahnen mit der Kernschicht durch Flammkaschieren flächig verbunden sind.

In weiterer Ausgestaltung der Erfindung ist vorgesehen, daß die Bahnen für die äußeren und inneren Mantelschichten mit einer einseitig aufkaschierten oder einkaschierten Verstärkungseinlage aus einem Gewebe, Gelege, Gewirke o.ä. aus Kunststoff und/oder Glasfasern mit einem Flächengewicht von 20 bis 70 $g/m^2$, vorzugsweise 25 bis 50 $g/m^2$ versehen sind. Damit wird die Festigkeit und Stabilität der schwimmenden Rohrleitung erhöht.

Eine bevorzugte Ausführung von Bahnen für die Mantelschichten sieht vor, dass die Bahnen aus zwei kalandrierten Schichten auf Basis EPDM und/oder EPM je einer Dicke von 0,6 bis 0,9 mm mit einer unter Anwendung von Druck und Wärme einkaschierten Verstärkungseinlage aus einem Gewebe, Gelege, Gewirke o.ä. aus Kunststoff und/oder Glasfasern mit einem Flächengewicht von 20 bis 70 $g/m^2$, vorzugsweise 25 bis 50 $g/m^2$ und Zwischenräumen des Gewebes, Geleges, Gewirkes o.ä. zwischen den Kett- und Schußfäden von mindestens 2,0 mm, vorzugsweise über 3 mm Abstand, wobei die Bahn durch den Durchgriff des elastomeren Kunststoffes durch die Zwischenräume des Gewebes o.dgl. eine Trennkraft der Schichten größer 100 N/5 cm aufweist, bestehen.

Hierbei enthalten die Bahnen bevorzugt

35 bis 46 Gew.-% EPDM und/oder EPM,

31 bis 26 Gew.-% Füllstoffe wie Kreide, Kaolin, Talkum, Schwerspat und/oder Glasfasern in Mischungen mit Kieselerde oder nur Kieselerde,

12 bis 7 Gew.-% aliphatische und/oder naphtenische Extenderöle,

Fig.1

Fig. 2

Dynamit Nobel Aktiengesellschaft Trois.

2/2

Fig.3

Dynamit Nobel Aktiengesellschaft, Troisdorf